# EUROPEAN PATENT APPLICATION

(11) **EP 3 682 978 A1**
(43) Date of publication of application: **22.07.2020**
(21) Application number: 19152636.7
(22) Date of filing: 18.01.2019
(51) Int. Cl.: B07B 13/18, B07B 13/16, B29C 64/357, B33Y 30/00, B33Y 40/00

(54) **SIEVING UNIT FOR SIEVING BUILD MATERIAL**

(71) Applicant: Concept Laser GmbH, 96215 Lichtenfels (DE)
(72) Inventor: Eideloth, Dominik, 96250 Ebensfeld (DE); Diller, Christian, 96215 Lichtenfels (DE); Grübert, Fabian, 96215 Lichtenfels (DE)
(74) Representative: Hafner & Kohl PartmbB

(57) **Abstract**

Sieving unit (1) for sieving build material (4) for an apparatus for additively manufacturing three-dimensional objects, which sieving unit (1) comprises a moving unit (17), in particular a vibrating unit, that is adapted to move a sieving element (2) for generating a sieving movement and conveying build material (4) to be sieved across the sieving element (2), wherein the sieving unit (1) comprises a determination unit (24) adapted to determine capacity information of the sieving element (2) relating to an amount of build material (4) to be sieved which is conveyed across the sieving element (2).

## Description

The invention relates to a dose unit for dosing, particularly powdery, build material, in particular for a sieving unit for an apparatus for additively manufacturing three-dimensional objects by means of successive layerwise selective irradiation and consolidation of layers of a build material which can be consolidated by means of an energy source.

Sieving units for sieving build material for the use in additive manufacturing processes are generally known from prior art. For example, used build material has to be sieved in advance to providing the build material to an application unit that is adapted to apply build material in a build plane, for instance. For example, the sieving unit is used to remove oversized particles or particle conglomerates from the build material. The sieving unit requires the build material to be provided in a specific amount, as the sieving process may be degraded by providing a too large or too low amount to the sieving element at once. For example, too much build material on the sieving element leads to a wastage of "good" build material, as build material of a desired particle size reaches the overflow in build material transport direction before it is sieved via the sieving element. On the other hand, less than optimal build material leads to an inefficient sieving process, as not the entire sieving element is used to sieve build material.

It is an object of the present invention to provide an improved sieving unit, in particular wherein the efficiency of the sieving process is improved and the wastage of build material is reduced or avoided.

The object is inventively achieved by a sieving unit according to claim 1. Advantageous embodiments of the invention are subject to the dependent claims.

The sieving unit described herein is for example a sieving unit for an apparatus for additively manufacturing three-dimensional objects, e.g. technical components, by means of successive selective layerwise consolidation of layers of a powdered build material ("build material") which can be consolidated by means of an energy source, e.g. an energy beam, in particular a laser beam or an electron beam. A respective build material can be a metal, ceramic or polymer powder. A respective energy beam can be a laser beam or an electron beam. A respective apparatus can be an apparatus in which an application of build material and a consolidation of build material is performed separately, such as a selective laser sintering apparatus, a selective laser melting apparatus or a selective electron beam melting apparatus, for instance. Alternatively, the successive layerwise selective consolidation of build material may be performed via at least one binding material. The binding material may be applied with a corresponding application unit and, for example, irradiated with a suitable energy source, e.g. a UV light source.

The apparatus may comprise a number of functional units which are used during its operation. Exemplary functional units are a process chamber, an irradiation device which is adapted to selectively irradiate a build material layer disposed in the process chamber with at least one energy beam, and a stream generating device which is adapted to generate a gaseous fluid stream at least partly streaming through the process chamber with given streaming properties, e.g. a given streaming profile, streaming velocity, etc. The gaseous fluid stream is capable of being charged with non-consolidated particulate build material, particularly smoke or smoke residues generated during operation of the apparatus, while streaming through the process chamber. The gaseous fluid stream is typically inert, i.e. typically a stream of an inert gas, e.g. argon, nitrogen, carbon dioxide, etc.

As described before, the sieving unit may be provided for sieving build material in advance to, during or after an additive manufacturing process, i.e. sieve fresh or previously used build material, for example non-consolidated build material removed from a build chamber of an additive manufacturing apparatus. After the build material has been pre-processed, e.g. fresh build material has been sieved, or the build material has been post-processed via the sieving unit, the build material can be (re)-used in an additive manufacturing process.

The invention is based on the idea that the sieving unit comprises a determination unit adapted to determine capacity information of the sieving element relating to an amount of build material to be sieved which is conveyed across the sieving element. Thus, it is inventively achieved that the determination unit can be used to determine capacity information that relate to the amount of build material which is (currently) sieved with / conveyed across the sieving element to be sieved via the sieving element. In other words, the capacity information may relate to the efficiency of the sieving process, as the capacity information indicate whether the sieving element is properly loaded with build material or whether too much or too little build material is currently conveyed across the sieving element.

If too much build material is conveyed across the sieving element, "good" build material is moved into the overflow which is arranged next to the sieving element in conveying direction. If too little build material is conveyed across the sieving element, the sieving element is not used efficiently. In other words, the build material being conveyed across the sieving element is sieved, as dependent on the particle size of the build material, the build material can pass the sieving element, e.g. a grid-like or mesh-like structure with a defined grid size or mesh size, in particular larger than the average desired particle size but smaller than a defined size assigned to the oversized particles. In other words, as build material is moved across the sieving element, particles of a desired particle size will fall through the sieving element, whereas oversized particles cannot pass the sieving element and are conveyed across the sieving element and disposed into an overflow unit arranged next to the sieving element in conveying direction. The term "conveying direction" or "build material transport direction" refers to the direction in which the build material is conveyed across the sieving element.

Hence, it is possible to perform the sieving process dependent on the capacity information and control the amount of build material that is provided onto the sieving element dependent on the capacity information. For example, if the capacity information indicates that too much build material is placed onto the sieving element, it is possible to reduce the amount of build material accordingly. The capacity information my further relate to a status of a sievieng element, e.g. wether the sieving element is saturated and has to be cleaned or exchanged. On the other hand, if the capacity information indicates that the sieving element is not properly used, as too little build material is provided onto the sieving element, the amount of build material can be increased. Therefore, it is possible to perform the sieving process more efficiently and avoid the wastage of "good" build material, e.g. build material of a desired particle size, which can be used in another additive manufacturing process.

According to a preferred embodiment, the determination unit of the inventive sieving unit may comprise at least one sensor, particularly a line sensor, arranged above or beneath the sieving element adapted to determine an intensity of a signal, particularly light, dependent on the amount of build material being conveyed across the sieving element. Thus, it is possible that the determination unit of the sieving unit comprises one or more sensors, in particular line sensors, that can be arranged above or beneath the sieving element. Hence, the sensor may comprise a signal generator and a signal receiver, e.g. adapted to generate a signal which is at least partially absorbed or reflected by build material being conveyed across the sieving element. Thus, dependent on the amount of build material that is currently conveyed across the sensor, a corresponding intensity of the signal is received via the signal receiver, wherein based on the received signal, capacity information can be generated. Therefore, it is possible to determine the capacity information based on a signal generated via the determination unit.

The determination unit, in particular the at least one sensor, may, for example, be arranged in an end region of the sieving element with respect to the conveying direction. Therefore, the amount of build material may be controlled in that a defined amount of build material reaches the position of the (line) sensor along the sieving element allowing for an efficient sieving process. For example, the at least one line sensor may be spaced away from the edge of the sieving element facing the overflow unit of the sieving unit by a defined distance, wherein the amount of build material that reaches the line sensor can be adjusted in that the build material is sieved via the remaining part of the sieving element in conveying direction, wherein the build material is conveyed across the defined distance, e.g. between the sensor and the edge. The part of the sieving element being arranged behind the line sensor in conveying direction can therefore be deemed as safety area, wherein the size of the safety area can be chosen in that the amount of build material that reaches the part of the sieving element behind the line sensor in conveying direction acts as safety, as build material that reaches the position of the line sensor can be sieved in the safety area before reaching the overflow unit.

Of course, it is also possible to adjust the amount of build material in that no build material reaches the position of the line sensor. Additionally or alternatively, it is possible to use more than one sensor, e.g. two sensors, wherein the individual sensors can be arranged in different positions along the sieving element. By using multiple sensors, it is possible to further increase the efficiency of the sieving process and react on or prevent irregularities in the sieving process, e.g. a fluctuating amount of build material conveyed across the sieving element.

According to a preferred embodiment, the sieving unit is or can be coupled with or comprises a dose unit with a dose chamber for receiving build material, wherein build material is conveyed, in particular by gravity, between a build material inlet and a build material outlet of the dose chamber, wherein the dose unit comprises at least one dose element that is adapted to adjust an aperture size of the build material outlet, in particular to at least one position between a fully open position and a fully closed position. Therefore, the dose unit provides a dose chamber in which build material can be received. The build material can be provided to the dose chamber via the build material inlet from where the build material can be conveyed, for example fall or trickle, to the build material outlet of the dose chamber, e.g. an opening in the dose chamber through which the build material can exit the dose chamber to be dispensed, e.g. onto the sieving element of the sieving unit. Particularly, the build material is conveyed from the build material inlet to the build material outlet via gravity, for example the build material may fall into the build chamber through the build material inlet towards the build material outlet.

Further, the dose unit may comprise a dose element that can be moved for adjusting the aperture size of the build material outlet. In other words, the build material may be conveyed through the build material outlet via an aperture that is formed via the build material outlet being at least partially covered via the dose element. Thus, by moving the dose element relative to the build material outlet, the aperture size of the build material outlet may be adjusted, wherein the amount of build material that can pass the aperture directly depends on the adjusted aperture size and therefore, depends on the position of the dose element. Particularly, the dose element can be positioned between a fully opened position and a fully closed position, wherein, for example, in the fully closed position the dose element may completely (or to a defined degree) cover the aperture size of the build material outlet and in a fully opened position the dose element may uncover a defined aperture size, for example the whole build material outlet.

Hence, the dose unit does not require a complex mechanical set up with moving parts or wherein a movement of parts of the dose unit is required for dosing build material. Instead, the dose element has only to be moved, if the dose rate, i.e. the amount of build material that is dispensed, has to be adjusted. In a steady operation of the dose unit, a movement of a part of the dose unit, such as the dose element, is not necessary. Hence, the requirements regarding the tool life, the wear and the sealing elements of the dose unit are significantly decreased compared to prior art dose units. Further, as it is not required to open and close a build material outlet for each batch of build material to be dispensed, a jam or seize up of build material caused by build material, in particular build material conglomerates, such as support structures, jamming the moving element as for example in cellular wheels sluices, is avoided.

According to a preferred embodiment of the sieving unit, the dose element may be movable relative to the build material outlet, wherein dependent on an adjusted aperture size of the build material outlet, the dose element at least partially covers the build material outlet. Therefore, a distance between two defined portions of the dose unit, such as the bottom of the dose chamber and a lower edge of the dose element, i.e. an edge of the dose element facing the bottom of the dose chamber, can be adjusted. Thus, it is possible to define the distance between the bottom of the dose chamber and the dose element and thereby, define the aperture size of the build material outlet through which build material may be dispensed. Hence, an aperture size can be adjusted via the dose element, wherein the dose element can be moved relative to the build material outlet to partially cover or uncover the build material outlet to a defined degree and therefore, allowing build material to pass or blocking build material from passing the build material outlet corresponding to the adjusted aperture size. In other words, the build material flow rate through the build material outlet may be adjusted via the dose element.

Particularly, the dose element may be built as linearly movable plate-like element or a pivotable flap or rotatable cam. As described before, the dose element can be moved relative to the build material outlet for adjusting an aperture size of the build material outlet. In particular, it is possible that the dose element is built as plate-like element that can linearly be moved over the build material outlet to close the build material outlet so as to define a proper amount of build material that can pass through the build material outlet in a defined time interval. In other words, the build material flow through the build material outlet can be adjusted via an adjustment to the position of the dose element relative to the build material outlet. Alternatively, it is also possible to build the dose element as pivotable flap that can be pivoted towards or away from the build material outlet to increase or decrease in aperture size corresponding to the desired build material flow rate through the build material outlet. Another way to build the dose element is a rotatable cam that can be rotated around an axis, wherein due to the eccentricity of the cam, the build material outlet can be opened or closed via a corresponding movement of the rotatable cam relative to the build material outlet.

Hence, the position of the dose element may define the build material flow through the build material outlet, in particular a layer thickness of build material dispensable through the build material outlet. In other words, the position of the dose element may be chosen so as to dispense a layer of build material of defined thickness, thereby defining the amount of build material that is dosed via the dose unit. By adjusting the position of the dose element relative to the build material outlet the layer thickness of the layer of build material that is dispensed via the dose unit can be adjusted to control the amount or the volume of dispensed build material. In other words, the dose unit allows for dispensing a layer of build material, wherein the layer thickness and therewith the amount of build material can be adjusted via the position of the dose element relative to the build material outlet.

The inventive sieving unit may further be improved in that the dose unit may be adapted to adjust the aperture size of the build material outlet dependent on at least one build material parameter, in particular a chemical and/or a physical and/or a mechanical build material parameter. For example, it is possible to adjust the aperture size dependent on the type of build material that has to be dispensed or dosed, for example the chemical composition of the build material and/or other build material parameters, such as a particle size and/or a particle size distribution of the build material particles. It is also possible to take the shape of the build material particles into calculation.

According to another embodiment, the dose unit may be adapted to adjust the position of the dose element in that the dose chamber is self-sealing, wherein build material received in the dose chamber is withheld by the build material outlet. Therefore, it is possible to position the dose element in that an aperture size of the build material outlet is adjusted that withholds the build material inside the dose chamber. In other words, the dose chamber may be self-sealing by adjusting the dose element in a corresponding position. With the dose element in the corresponding position in which the dose chamber is self-sealing, the build material does not by itself pass the aperture, but is withheld by the self-locking effect of build material blocking/clogging the aperture of the build material outlet. In other words, an external force or another movement that has to be applied on the dose unit which is required to move the build material through the build material outlet, in particular through the aperture adjusted via the position of the dose element relative to the build material outlet. In a steady position, in which no (dynamic) force (other than gravity) is applied onto the dose unit, the dose chamber is self-sealing in that build material does not pass the aperture formed by the build material outlet and the dose element at least partially covering the build material outlet.

Further, the build material inlet may be arranged in an upper part of the dose chamber, in particular at the top of the dose chamber, and the build material outlet may be arranged in a lower part of the dose chamber, in particular at the lower edge of a side wall of the dose chamber. Hence, as described before, build material provided to the dose unit may enter the dose chamber through the build material inlet which is particularly arranged in an upper part of the dose chamber, particularly at the top of the dose chamber, wherein the build material may fall, in particular due to gravity, towards the build material outlet which is arranged in the lower part of the dose chamber. The build material outlet is particularly preferred arranged at the lower edge of the sidewall of the dose chamber, in particular in the region in which the sidewall contacts the bottom of the dose chamber.

Thus, the build material outlet may be shaped as a slit or slit-like, in particular arranged in parallel to a bottom edge of the dose chamber. Hence the slit-shaped or slit-like build material outlet may be arranged at a bottom edge of the dose chamber, wherein the dose element may be positioned relative to the build material outlet to increase or decrease the size of the slit for dosing build material or adjusting the amount of build material that may pass the slit.

According to an embodiment of the inventive sieving unit, the dose unit may comprise a moving unit or is connected or connectable with a moving unit, in particular a vibratory moving unit of the sieving unit, particularly a linear actuator, that is adapted to convey build material through the build material outlet, particularly in the self-sealing state. Thus, the dose unit may comprise or may be coupled with a moving unit that is adapted to interact with the dose unit to convey build material through the build material outlet.

As described before, the build material may be withheld via the aperture of the build material outlet that is adjusted via the dose element, wherein the build material may pass the aperture of the build material outlet due to the movement of the moving unit that is transferred to the dose unit. For example, the moving unit may be built as vibratory moving unit, wherein the vibratory moving unit is adapted to transfer the generated vibrations onto the dose unit and therefore, convey build material through the (slit-like) aperture of the build material outlet and therefore, dispense build material dependent on the aperture size of the build material outlet, as adjusted via the dose element. The moving unit is particularly assigned to the sieving element, which moving unit generates the vibrations for moving the build material to be sieved across the sieving element.

Hence, the dose unit is coupled or can be coupled with a vibratory conveyer of the sieving unit, wherein the dose unit may be adapted to dose build material dependent on a movement of the vibratory conveyor through the build material outlet to a sieving element of the sieving unit. For example, the sieving unit may comprise a moving unit, in particular a vibratory conveyor, that is adapted to set the at least one sieving element, in particular a mesh or grid, in vibration and therefore, (linearly) convey build material over the sieving element. The dose unit may be coupled with the vibratory conveyor of the sieving unit and therefore, the build material inside the dose chamber may also be set into vibration and can therefore, pass the aperture of the build material outlet. Hence, it is possible to dispense build material through the build material outlet onto a sieving element of the sieving unit, wherein the amount of build material that is dispensed onto the sieving element can be adjusted via the position of the dose element.

Build material that passes the build material outlet may be provided to the sieving element, wherein due to the vibration of the sieving element the build material is conveyed over the sieving element and will fall through gaps of the sieving element dependent on various parameters of the sieving element and the build material, such as the particle size of the build material and the mesh size of sieving element. In other words, the build material that is provided to the sieving element will be transferred over the sieving element until the build material falls through the sieving element. Oversized particles, such as build material particle conglomerates will not fall through the sieving element and will be transported over the sieving element to a receiving section and can be removed from the additive manufacturing process.

Additionally, it is possible to provide an overflow unit at the end of the sieving element into which the oversized build material particles may be conveyed. Further, an additional moving unit, for example an ultrasonic conveyor, may be attached to the sieving element for improving the sieving process, as build material is more likely to pass the sieving element.

Build material can be provided to the dose unit in different ways, for example it is possible to couple the build material inlet with a build material supply unit, wherein build material can be provided via the build material supply unit through the build material inlet into the dose chamber, in particular manually or at least semi-automatically. In particular, it is possible that an operator of the dose unit manually puts build material through the build material inlet into the dose chamber or it is possible that the build material inlet is coupled to an automated build material supply unit, for example a build material transfer path inside an additive manufacturing apparatus. Hence, the build material inlet may (directly) be connected to a build material removal unit that is adapted to remove build material from a build chamber, for example a suction unit that is adapted to suck build material out of the build chamber.

The inventive sieving unit may further be improved by a build material guiding element that can be arranged in the dose chamber and is adapted to guide, in particular distribute, build material entering the dose chamber through the build material inlet. The build material guiding element may, for example be built as baffle, guide plate or deflector plate, wherein, of course, multiple guiding elements may be provided that are adapted to guide build material entering the dose chamber to different regions of the dose chamber. It is particularly preferred, that the build material guiding element achieves a uniform distribution of build material inside the dose chamber.

The inventive sieving unit may further comprise a fill level sensor that is adapted to determine a fill level of build material in the dose chamber. Dependent on the signal the at least one fill level sensor provides, build material may be refilled into the dose chamber or, the process the dose unit provides and doses build material for, can be controlled dependent on the fill level inside the dose chamber. For example, a sieving process can be stopped after a defined time after the fill level sensor indicated that the dose chamber is empty.

With the sieving unit it is particularly possible to dose build material over essentially the entire width of the sieving element. Hence, the width and length of the sieving element can properly be loaded with build material, allowing for an optimal use of the sieving element. Further, it is possible to establish and maintain a defined atmosphere, e.g. comprising an inert gas, inside the dose chamber of the sieving unit. Therefore, the dose chamber may be sealed against the environment. Thus, it is possible to keep the build material under defined conditions, e.g. und er an inert atmosphere, especially allowing to use reactive build materials.

Besides, the invention relates to a method for sieving build material using a sieving unit, particularly an inventive sieving unit, as described before, in particular for an apparatus for additively manufacturing three-dimensional objects by means of successive layerwise selective irradiation and consolidation of layers of a build material which can be consolidated by means of an energy source, wherein capacity information of a sieving element of the sieving unit are determined relating to an amount of build material to be sieved which is conveyed across the sieving element.

Further, the invention relates to an apparatus for additively manufacturing three-dimensional objects by means of successive layerwise selective irradiation and consolidation of layers of a build material which can be consolidated by means of an energy source, comprising an inventive sieving unit, as described before.

Self-evidently, all features, details and advantages described with respect to the inventive sieving unit are fully transferable to the inventive apparatus and the inventive method.

Exemplary embodiments of the invention are described with reference to the Fig. The Fig. are schematic diagrams, wherein
- Fig. 1: shows an inventive sieving unit according to a first embodiment;
- Fig. 2: shows a dose unit of the sieving unit from Fig. 1; and
- Fig. 3: shows a dose unit according to a second embodiment.

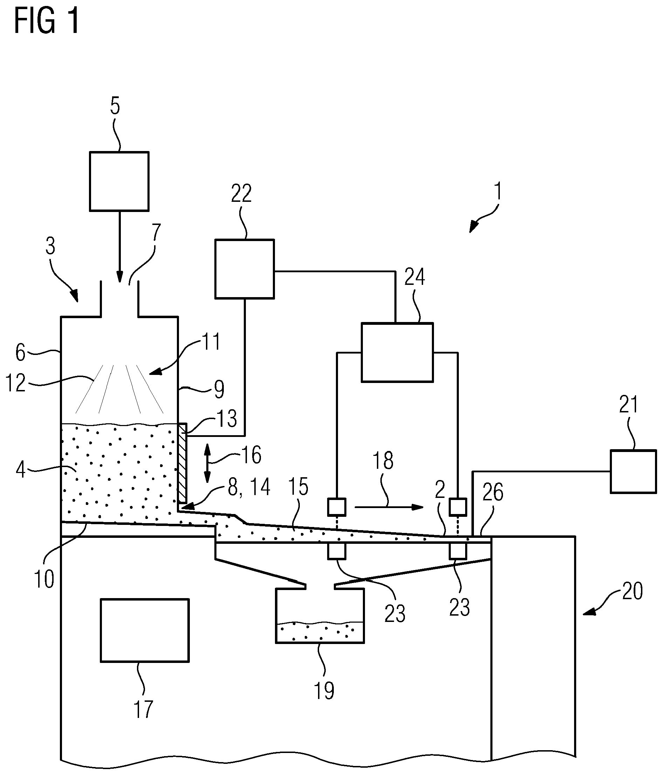

Fig. 1 shows a sieving unit 1 with a sieving element 2, for example a mesh or a grid with a defined grid size / mesh size. The sieving unit 1 further comprises a dose unit 3 for dosing build material 4. The sieving unit 1 can, in particular, be used to sieve the build material 4 for an apparatus for additively manufacturing three-dimensional objects (not shown), for example build material 4 that was removed from a build chamber of an additive manufacturing apparatus after the additive manufacturing process is finished.

The build material 4 may be provided to the dose unit 3 via a build material supply unit 5, for example an automated build material transportation cycle attached to a build chamber or a removal unit of the additive manufacturing apparatus. The build material 4 that is provided to the dose unit 3 can be filled into a dose chamber 6 of the dose unit 3 via a build material inlet 7, wherein the build material 4 provided to the dose chamber 6 falls from the build material inlet 7 to a build material outlet 8 due to gravity. As can be derived from Fig. 1, the build material inlet 7 is arranged in an upper region of the dose unit 3, in particular at the top of the dose unit 3, whereas the build material outlet 8 is arranged in a lower region of the dose unit 3, in particular at a lower edge between a sidewall 9 and a bottom 10 of the dose unit 3. Hence, build material 4 received within the dose chamber 6 is carried via the bottom 10 of the dose chamber 6 and therefore, is decoupled from the sieving element 2. Thus, the volume of build material 4 is not in contact with the sieving element 2 before the build material 4 leaves the dose chamber 6 as it is dosed onto the sieving element 2.

The dose unit 3 further comprises a build material guiding unit 11 (optional) with several build material guiding elements 12 that are adapted to guide and distribute the build material 4 inside the dose chamber 6 of the dose unit 3. The dose rate / build material flow of build material 4 through the build material outlet 8 can be adjusted via a dose element 13 of the dose unit 3. In this exemplary embodiment, the dose element 13 is built as plate-like element that can be (linearly, vertically) moved relative to the build material outlet 8. In other words, an aperture size of an aperture 14 of the build material outlet 8 can be adjusted via the dose element 13. The dose element 13 can, in particular, be moved from a fully opened position in which the build material outlet 8 is fully opened to a fully closed position in which the build material outlet 8 is fully closed and of course, to any arbitrary position in between.

Hence, the size of the aperture 14 can be adjusted by positioning the dose element 13 relative to the build material outlet 8. Therefore, the thickness of a layer 15 of build material 4 that is dispensed through the aperture 14 can be adjusted via the position of the dose element 13. For example, in order to decrease the layer thickness of the layer 15 of build material 4 and thereby, the amount of build material 4 dispensed through the aperture 14, the dose element 13 can be lowered (indicated via arrow 16) and in order to increase the amount of build material 4 dispensed through the aperture 14, the dose element 13 can be raised (also indicated via arrow 16).

It is particularly possible that the dose chamber 6 of the dose unit 3 is self-sealing, wherein the, particularly slit-like, aperture 14, is adjusted via the position of the dose element 13, in that the build material 4 is withheld by the aperture 14 as long as no (dynamic) force is applied on the dose unit 3. The sieving unit 1 comprises a moving unit 17, in particular a vibratory conveyor, that is adapted to linearly move at least one part of the sieving unit 1 and the dose unit 3 together with the part of the sieving unit 1. Due to the vibratory movement of the moving unit 17, build material 4 is dispensed through the aperture 14 onto the sieving element 2. Dependent on various parameters of the build material 4, such as the particle size and parameters of the sieving element 2, such as the mesh size, build material 4 is conveyed over the sieving element 2 in a build material transport direction 18 / conveying direction. Build material particles with a particle size matching a defined particle size, in particular that falls below a predefined particle size, as defined by the mesh size, will fall through the sieving element 2 into a build material receiving unit 19 and can afterwards be provided to another additive manufacturing process, for instance.

Oversized build material particles, such as build material particle conglomerates, are moved in build material transport direction 18 towards and into an overflow unit 20 and can therefore, be removed from the additive manufacturing process. The sieving unit 1 further comprises a vibratory unit 21 connected to the sieving element 2 for setting the sieving element 2 into vibration, such as an ultrasonic vibratory conveyor. The vibratory unit 21 further enhances the sieving process, as the sieving element 2 is set into vibration and therefore, allows for an improved sieving of the build material 4 resting on / being moved across the sieving element 2.

The dose element 13 of the dose unit 3 is connected to a drive mechanism 22, for example comprising an actuator and a control unit (optional, not shown), wherein the drive mechanism 22 is adapted to adjust the position of the dose element 13, particularly from outside the sieving unit 1. The position of the dose element 13 can particularly be adjusted dependent on various parameters, such as build material parameters, in particular physical, mechanical or chemical parameters of the build material 4. In particular, it is possible to adjust the position of the dose element 13 dependent on a layer thickness of the layer 15, in particular dependent on the aperture size of the aperture 14. In other words, if the amount of build material 4 that is dispensed on the sieving element 2 has to be adjusted, the drive mechanism 22 can be used to change the position of the dose element 13 relative to the build material outlet 8.

The sieving unit for further comprises 2 sensors 23, for example line sensors, that extend across the sieving element 2. The 2 sensors 23 arranged in different positions, wherein after the second sensor 23 a safety area 26 is arranged in conveying direction 18 between the sensor 23 and the overflow 20. In this exemplary embodiment the census 23 are adapted to generate a signal, in particular a light signal, between a signal generator and the signal receiver, wherein dependent on the amount of build material for that is currently conveyed across the region of the sieving element to the sensor 23 is assigned to, a corresponding signal can be received. In other words, a signal generator that is arranged above or beneath the sieving element to generate a signal that can be received with the corresponding signal receiver. Dependent on the amount of build material that is arranged between the signal generator and the signal receiver, the signal of various, in particular the intensity of the signal, such as a light signal.

Thus, it is possible to control the amount of build material for that is dispensed onto the sieving element to dependent on a capacity information that can be determined via a determination unit 24, e.g. a control unit, that is coupled with the sensors 23. Of course, it is also possible to use only one sensor 23. Thus, it is possible that the signal that is received via the signal receiver of the sensor 23 can be received via the determination unit 24, wherein the determination unit 24 is adapted to control the drive mechanism 22 and therefore, adjust the position of the dose element 13 and therefore, adjust the size of the aperture 14. Hence, dependent on the amount of build material for that can be determined via the sensor 23, e.g. arranged in advance to the safety area 26, it is possible to control the amount of build material for dispensed onto the sieving element 2. Therefore, the sieving process can be controlled more efficiently, as it is ensured that the sieving element to is used over the entire length of the sieving element 2 in conveying direction 18 and that "good" build material, e.g. build material 4 of a defined particle size, is not wasted and dispensed into the overflow 20.

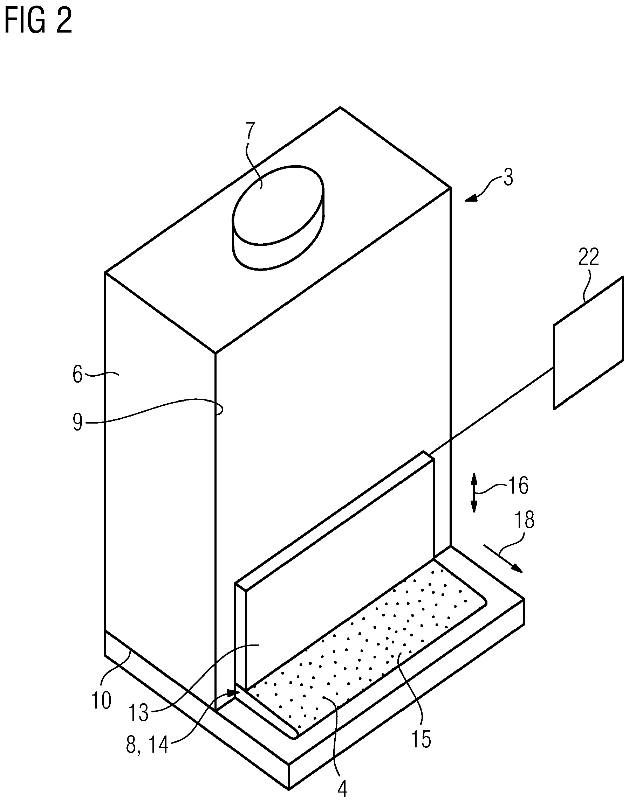

Fig. 2 shows the dose unit 3 from Fig. 1 in a perspective view. For the sake of simplicity, the various parts of the sieving unit 1 are omitted, wherein only parts of the dose unit 3 are depicted. As can be derived from Fig. 2, the dose unit 3 comprises the build material inlet 7 arranged at the top of the dose unit 3, leading build material 4 into the dose chamber 6 towards the build material outlet 8 that is arranged in a lower region of the dose chamber 6, in particular at the edge between the sidewall 9 and the bottom 10 of the dose chamber 6. The dose element 13 partially covers the build material outlet 8 and therefore, adjusts an aperture size of the aperture 14 through which build material 4 can be conveyed and therefore, a layer 15 of build material 4 can be dispensed through the aperture 14. As described before, the thickness of the layer 15 can be adjusted by changing the position of 13 according to arrow 16, wherein by lowering the dose element 13 the layer thickness of the layer 15 can be decreased and by raising the dose element 13 of the layer thickness of the layer 15 can be increased.

The change in position of the dose element 13 can be controlled by the drive mechanism 22, in particular comprising an actuator and a control unit, as also described before. Dependent on the movement of the moving unit 17 (cf. Fig. 1) build material 4 exiting the aperture 14 is conveyed in build material flow direction 18.

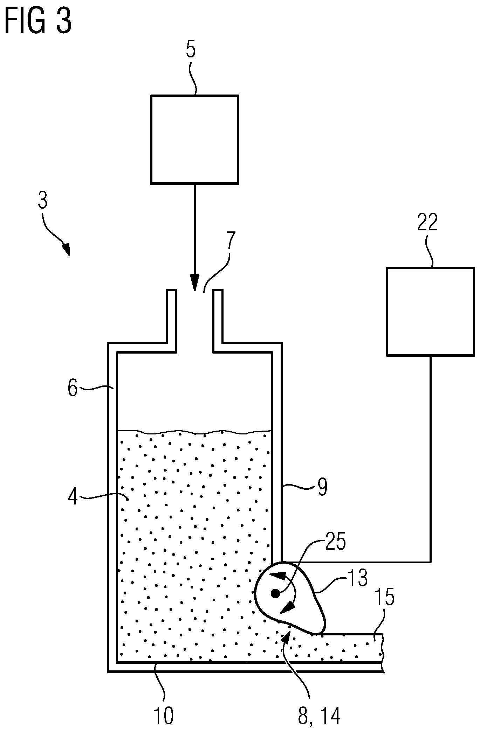

Fig. 3 shows a dose unit 3 according to a second embodiment, wherein the same numerals are used for the same parts. The dose unit 3, as depicted in Fig. 3, also comprises a dose chamber 6 with a build material inlet 7 arranged at the top of the dose chamber 6 and a build material outlet 8 arranged in a lower region of the dose chamber 6, in particular arranged at the edge of the sidewall 9 and the bottom 10 of the dose chamber 6. Build material 4 can be filled into the dose chamber 6 through the build material inlet 7 via a build material supply unit 5, as also described before.

Deviant from the dose unit 3 according to the first embodiment, the dose unit 3 according to the second embodiment comprises a dose element 13 that is built as rotatable cam that can be rotated about an axis 25. The position of the dose element 13, in particular the rotation of the cam can be controlled via the drive mechanism 22. Dependent on the position of the dose element 13, in particular dependent on the rotation of the dose element 13, the thickness of the layer 15 of build material 4 that is dispensed through the aperture 14 can be adjusted. For example, by rotating the dose element 13 (in this Fig.) clockwise, the size of the aperture 14 can be decreased and rotating the dose element 13 counterclockwise increases the size of the aperture 14 and thereby, the thickness of the layer 15 of build material 4 dispensed through the aperture 14.

Of course, the inventive method can be performed on the inventive sieving unit 1, particularly using the inventive sieving unit 3. All features, details and advantages described with respect to the individual embodiments can arbitrarily combined, exchanged and transferred.

## Claims

1. Sieving unit (1) for sieving build material (4) for an apparatus for additively manufacturing three-dimensional objects, which sieving unit (1) comprises a moving unit (17), in particular a vibrating unit, that is adapted to move a sieving element (2) for generating a sieving movement and conveying build material (4) to be sieved across the sieving element (2), **characterized by** a determination unit (24) adapted to determine capacity information of the sieving element (2) relating to an amount of build material (4) to be sieved which is conveyed across the sieving element (2).

2. Sieving unit according to claim 1, **characterized in that** the determination unit (24) comprises at least on line sensor (23) arranged above or beneath the sieving element (2) adapted to determine an intensity of a signal, in particular light, dependent on the amount of build material (4) being conveyed across the sieving element (2).

3. Sieving unit according to claim 1 or 2, **characterized by** a dose unit (3) for dosing, particularly powdery, build material (4), comprising a dose chamber (6) for receiving build material (4), wherein build material (4) is conveyed, in particular by gravity, between a build material inlet (7) and a build material outlet (8) of the dose chamber (6), wherein the dose unit (3) comprises at least one dose element (13) that is adapted to adjust a size of an aperture (14) of the build material outlet (8), in particular to at least one position between a fully opened position and a fully closed position, wherein an amount of build material (4) that is dosed onto the sieving element (2) can be controlled by the size of the aperture (14).

4. Sieving unit according to claim 3, **characterized in that** the dose element (13) is movable relative to the build material outlet (8), wherein dependent on an adjusted size of the aperture (14) of the build material outlet (8), the dose element (13) at least partially covers the build material outlet (8).

5. Sieving unit according to claim 3 or 4, **characterized in that** the dose element (13) is built as linearly movable plate-like element or pivotable flap or rotatable cam.

6. Sieving unit according to one of the claims 3 to 5, **characterized in that** the position of the dose element (13) defines the build material flow through the build material outlet (8), in particular a layer thickness of build material (4) dispensable through the build material outlet (8).]

7. Sieving unit according to one of the claims 3 to 6, **characterized in that** the dose unit (3) is adapted to adjust the size of the aperture (14) of the build material outlet (8) dependent on at least one build material parameter, in particular a chemical and/or a physical and/or a mechanical build material (4) parameter.

8. Sieving unit according to one of the claims 3 to 7, **characterized in that** the dose unit (3) is adapted to adjust the size of the aperture (14) of the build material outlet (8) and/or dependent on the capacity information.

9. Sieving unit according to one of the claims 3 to 8, **characterized in that** the dose unit (3) is adapted to adjust the position of the dose element (13) **in that** the dose chamber (6) is self-sealing, wherein build material (4) received in the dose chamber (6) is withheld by the build material outlet (8).

10. Sieving unit according to one of the claims 3 to 9 **characterized in that** the build material inlet (7) is arranged in an upper part of the dose chamber (6), in particular at the top of the dose chamber (6), and the build material outlet (8) is arranged in a lower part of the dose chamber (6), in particular at a lower edge of a side wall (9) of the dose chamber (6).

11. Sieving unit according to one of the claims 3 to 10, **characterized in that** the build material outlet (8) is shaped as a slit or slit-like, in particular arranged in parallel to a bottom (10) of the dose chamber (6).

12. Sieving unit according to one of the claims 3 to 11, **characterized by** a build material guiding element (11) that is arranged in the dose chamber (6) and is adapted to guide, in particular distribute, build material (4) entering the dose chamber (6) through the build material inlet (7) in the dose chamber (6).

13. Sieving unit according to one of the claims 3 to 12, **characterized by** a fill level sensor that is adapted to determine a fill level of build material (4) in the dose chamber (6).

14. Apparatus for additively manufacturing three-dimensional objects by means of successive layerwise selective irradiation and consolidation of layers of a build material (4) which can be consolidated by means of an energy source, **characterized by** a sieving unit (1) according to one of the preceding claims.

15. Method for sieving build material (4) using a sieving unit (1), particularly a sieving unit (1) according to one of the claims 1 to 13, in particular for an apparatus for additively manufacturing three-dimensional objects by means of successive layerwise selective irradiation and consolidation of layers of a build material (4) which can be consolidated by means of an energy source, **characterized by** determining capacity information of a sieving element (2) of the sieving unit (1) relating to an amount of build material (4) to be sieved which is conveyed across the sieving element (2).
